# EUROPEAN PATENT APPLICATION

(11) **EP 4 778 986 A1**
(43) Date of publication of application: **22.07.2026**
(21) Application number: 25152028.4
(22) Date of filing: 15.01.2025
(51) Int. Cl.: C09J 4/06

(54) **LIGHT INDUCED REDOX CURING COMPOSITIONS**

(71) Applicant: Henkel AG & Co. KGaA, 40589 Düsseldorf (DE)
(72) Inventor: Deegan, Brian, Wicklow (IE); Sweeney, Nigel, Dublin, 6W (IE); Burns, Barry, Dublin, A96 A4P0 (IE); Haberlin, Gavin, Naas, W91A0X8 (IE)

(57) **Abstract**

The present invention relates to a light induced redox curing composition comprising a) an (meth)acrylate monomer; b) an (meth)acrylate resin; c) a cationic photoinitiator; and d) a hydroperoxide. The composition can be used in electrocoated steel bonding.

## Description

### Field of the invention

The present invention relates to a light induced redox curing compositions which are particularly suitable for in electrocoated steel bonding.

### Background of the invention

Photoinitiated curable adhesive compositions based on epoxy resins offer numerous benefits and advantages that are highly desirable to end users. These compositions produce cured products with physical properties comparable to those derived from traditional thermosetting compositions. However, they do not require heat for curing-an important feature since the application of heat can, at times, compromise the structural integrity of the substrate or other components involved.

Photoinitiated, cationically curable epoxy resin compositions containing a ferrocenium complex salt compounds with cycloaliphatic epoxide groups, and a solvent are known from the prior art. These ferrocenium complex salt compounds are known to provide a delayed cure.

However, the use of epoxy-based compositions in this regard is oftentimes disfavoured due in part to the yellowing that may be observed with such compositions and the heat of reaction generated by such compositions.

There are also several different kinds of acrylic-based compositions providing delayed cure. For example, an acrylic composition comprising an acrylic monomer, a peroxy initiator and a ferrocenium salt. Or a photoactivatable anaerobic adhesive composition comprised of an anaerobically curable acrylate ester monomer, a compound which decomposes upon exposure to UV/Vis light radiation to release a strong acid, a peroxy free radical initiator, and a ferrocenyl activator. Or a curable composition comprising a compound having a (meth)acryloyl group in a molecule, saccharin, and a photocationic catalyst.

Typically, such acrylic-based compositions require a presence of a metallocene containing photoinitiator along with an acidic activator component and a peroxide or the use of a photocationic catalyst along with saccharin, or anaerobic conditions to cure. The metallocenes tend to have a limited stability in the presence of hydroperoxides, and such compositions do not work without a presence of saccharin. In addition, there are some health concerns relating to use of saccharin.

Therefore, there is a need to provide a stable light induced redox curing composition with a delayed cure taking into consideration health considerations while enabling bonding of materials and substrates that may or may not be UV/Vis blocking at room temperature via UV/Vis activation.

### Summary of the invention

The present invention relates to a light induced redox curing composition comprising a) an (meth)acrylate monomer; b) an (meth)acrylate resin; c) a cationic photoinitiator; and d) a hydroperoxide.

The present invention also relates to a cured adhesive product obtained by curing the light induced redox curing composition according to the present invention.

The present invention encompasses an article comprising the light induced redox curing composition or the cured adhesive product according to the present invention.

The present invention also encompasses use of light induced redox curing composition or cured adhesive product according to the present invention in electrocoated steel bonding.

### Detailed description of the invention

In the following passages the present invention is described in more detail. Each aspect so described may be combined with any other aspect or aspects unless clearly indicated to the contrary. In particular, any feature indicated as being preferred or advantageous may be combined with any other feature or features indicated as being preferred or advantageous.

In the context of the present invention, the terms used are to be construed in accordance with the following definitions, unless a context dictates otherwise.

As used herein, the singular forms "a", "an" and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps.

As used herein, the term *"consisting of"* excludes any element, ingredient, member or method step not specified.

The words *"preferred", "preferably", "desirably"* and *"particularly"* are used frequently herein to refer to embodiments of the disclosure that may afford particular benefits, under certain circumstances. However, the recitation of one or more preferable, preferred, desirable or particular embodiments does not imply that other embodiments are not useful and is not intended to exclude those other embodiments from the scope of the disclosure.

As used throughout this application, the word *"may"* is used in a permissive sense - that is meaning to have the potential to - rather than in the mandatory sense.

The recitation of numerical end points includes all numbers and fractions subsumed within the respective ranges, as well as the recited end points.

All percentages, parts, proportions and then like mentioned herein are based on weight unless otherwise indicated.

When an amount, a concentration or other values or parameters is/are expressed in form of a range, a preferable range, or a preferable upper limit value and a preferable lower limit value, it should be understood as that any ranges obtained by combining any upper limit or preferable value with any lower limit or preferable value are specifically disclosed, without considering whether the obtained ranges are clearly mentioned in the context.

As used herein, the term *"one component (1K) composition"* refers to a composition where, during storage of the composition, the composition components are all admixed together but the properties of the composition, including viscosity, remain consistent enough over the time of storage to permit successful utility of the composition at a later time.

As used herein, room temperature is 23°C plus or minus 2°C. As used herein, *"ambient conditions"* means the temperature and pressure of the surroundings in which the composition is located or in which a coating layer or the substrate of said coating layer is located.

As used herein, "*(meth)acry"* is a shorthand term referring to *"acryl"* and/or *"methacryl".* Thus, the term *"(meth)acrylamide"* refers collectively to acrylamide and methacrylamide.

As used herein, the term *"monomer"* refers to a substance that can undergo a polymerization reaction to contribute constitutional units to the chemical structure of a polymer.

The term *"monofunctional",* as used herein, refers to the possession of one polymerizable moiety.

The term *"polyfunctional",* as used herein, refers to the possession of more than one polymerizable moiety.

All references cited in the present specification are hereby incorporated by reference in their entirety.

Unless otherwise defined, all terms used in disclosing the invention, including technical and scientific terms, have the meaning as commonly understood by one of the ordinary skilled in the art to which this invention belongs to. By means of further guidance, term definitions are included to better appreciate the teaching of the present invention.

The present invention relates to a light induced redox curing composition comprising a) an (meth)acrylate monomer; b) an (meth)acrylate resin; c) a cationic photoinitiator; and d) a hydroperoxide.

The composition according to the present invention is 1K light induced redox curable adhesive that can be used with fast activation with UV/Vis radiation prior to assembly of the bonded specimen and cured at room temperature. Once the composition is being activated it will cure in the presence of oxygen, meaning the fillet/squeeze out cures. The composition provides good performance across a range of substrates including those that block UV/Vis radiation. The composition according to the present invention works without the presence of acidic activator and/or saccharin and cures without a primer and anaerobic conditions. The delayed bonding and cure after the activation are desired properties especially when opaque substrates and/or substrates with low transmissivity are to be assembled.

The light induced redox curing composition according to the present invention comprises a (meth) acrylate monomer. There is no particular intention to limit (meth)acrylate esters having utility herein and it is considered that the (meth)acrylate monomers may be any ester of acrylic acid or methacrylic acid known to the art.

Preferably the (meth)acrylate monomer is aromatic or aliphatic mono-, di-, or poly-functional (meth)acrylate monomer, preferably represented by the formula H₂C=CGCO₂A, wherein G is selected from the group consisting of hydrogen, halogen or alkyl groups having from 1 to 4 carbon atoms, and A is selected from the group consisting of metals, alkyl, cycloalkyl, alkenyl, cycloalkenyl, alkaryl, aralkyl or aryl groups having from 1 to 16 carbon atoms, any of which may be optionally substituted.

That said, exemplary (meth)acrylic monomers include but are not limited to:
- C₁-C₁₈ alkyl esters of (meth)acrylic acid, such as methyl (meth)acrylate, ethyl (meth)acrylate, n-propyl (meth)acrylate, isopropyl (meth)acrylate, butyl (meth)acrylate (all isomers), hexyl (meth)acrylate, n-heptyl(meth)acrylate, n-octyl(meth)acrylate, 2-ethylhexyl (meth)acrylate, n-nonyl(meth)acrylate, n-decyl(meth)acrylate, n-dodecyl(meth)acrylate and n-stearyl(meth)acrylate;
- C₃-C₁₈ cycloalkyl esters of (meth)acrylic acid, such as cyclohexyl(meth)acrylate and isobornyl(meth)acrylate;
- C₆-C₁₈ aryl esters of (meth)acrylic acid, such as phenyl(meth)acrylate and tolyl(meth)acrylate;
- C₇-C₂₄ aralkyl esters of (meth)acrylic acid, such as benzyl(meth)acrylate;
- C₁-C₁₈ alkoxyalkyl esters of (meth)acrylic acid, such as 2-methoxyethyl(meth)acrylate, 2-ethoxyethyl(meth)acrylate and 3-methoxybutyl(meth)acrylate;
- fluorine-containing C₁-C₁₈ alkyl esters of (meth)acrylic acid, such as trifluoromethylmethyl(meth)acrylate, 2-trifluoromethylethyl(meth)acrylate, 2-perfluoroethylethyl(meth)acrylate, 2-perfluoroethyl-2-perfluorobutylethyl(meth)acrylate, 2-perfluoroethyl(meth)acrylate, perfluoromethyl(meth)acrylate, diperfluoromethylmethyl(meth)acrylate, 2-perfluoromethyl-2-perfluoroethylmethyl(meth)acrylate, 2-perfluorohexylethyl(meth)acrylate, 2-perfluorodecylethyl(meth)acrylate and 2-perfluorohexadecylethyl(meth)acrylate;
- C₁-C₁₈ hydroxyalkyl esters of (meth)acrylic acid, such as 2-hydroxyethyl(meth)acrylate, 2-hydroxypropyl(meth)acrylate and penta erythritol tri(meth)acrylate;
- di/poly-esters of di/poly-functional alcohols, such as ethylene glycol di(meth)acrylate, 1,3 or 1,4-butanediol di(meth)acrylate, 1,6-hexanediol di(meth)acrylate and trimethylolpropane tri(meth)acrylate;
- C₁-C₁₈ aminoalkyl esters of (meth)acrylic acid, such as 2-aminoethyl(meth)acrylate, dimethylaminoethyl (meth)acrylate and (meth)acryloxyethoxyethylamine;
- C₁-C₁₈ alkoxysilyl-containing alkyl esters of (meth)acrylic acid, such as γ-(methacryloyloxypropyl)trimethoxysilane;
- ethylene oxide or propylene oxide adducts of (meth)acrylic acid; and,
- (meth)acrylate esters formed by alcohols bearing other functional groups, such as tetrahydrofurfuryl (meth)acrylate.

In a preferred embodiment the (meth)acrylate monomer is selected from the group consisting of polyethylene glycol di(meth)acrylate, tetrahydrofuran (meth)acrylate, hydroxypropyl (meth)acrylate, hexanediol di(meth)acrylate, trimethylol propane tri(meth)acrylate, diethylene glycol dimethacrylate, triethylene glycol dimethacrylate, benzylmethacrylate, tetraethylene glycol dimethacrylate, dipropylene glycol dimethacrylate, di-(pentamethylene glycol) dimethacrylate, tetraethylene diglycol diacrylate, diglycerol tetramethacrylate, tetramethylene dimethacrylate, ethylene dimethacrylate, neopentyl glycol diacrylate, trimethylol propane triacrylate, tetrahydrofurfuryl (meth)acrylate, alkoxylated tetrahydrofurfuryl (meth)acrylate, cyclic trimethylolpropane formal acrylate, 2-phenoxyethyl (meth)acrylate, 2-(2-ethoxyethoxy) ethyl(meth)acrylate, alkoxylated lauryl (meth)acrylate, stearyl (meth)acrylate, lauryl (meth)acrylate, isodecyl (meth)acrylate, isooctyl (meth)acrylate, octyldecyl (meth)acrylate, tridecyl (meth)acrylate, caprolactone (meth)acrylate, methoxy polyethylene glycol (350) monoacrylate, methoxy polyethylene glycol (550) monoacrylate, 2-hydroxyethyl (meth)acrylate, isobornyl (meth)acrylate, hydroxypropyl (meth)acrylate, (meth)acrylic acid, copper di(meth)acrylate, iron di(meth)acrylate, zinc di(meth)acrylate and mixtures thereof, preferably the acrylate monomer is selected from the group consisting of 2-hydroxyethyl methacrylate, isobornyl methacrylate, hydroxypropyl methacrylate, acrylic acid and mixtures thereof.

The above listed and specifically preferred (meth)acrylate monomers provide good base formulation for general bonding and have a good solubility of wide variety of additives (curatives, fillers, crosslinkers etc.).

Suitable commercially available (meth)acrylate monomers for use in the present invention include but are not limited to 2-hydroxyethyl methacrylate and hydroxypropyl methacrylate from Geo speciality chemicals, isobornyl methacrylate from Evonik and acrylic acid from Univar.

The (meth)acrylate monomer may be present in the light induced redox curing composition according to the present invention in a quantity from 50 to 70% by weight of the total weight of the of the composition, preferably from 53 to 67% and more preferably from 55 to 65%.

The above preferred ranges are ideal especially in combination with the preferred (meth)acrylate resin quantities leading to the ideal overall quantity of a curable component in relation to the hydroperoxide and the cationic photoinitiator quantities to provide ideal open time (time after the end of the UV/Vis exposure in which the formulation is still liquid enough to be able to be bonded) to an un-usable short time (less than one second).

The light induced redox curing composition according to the present invention comprises a (meth)acrylate resin.

The (meth)acrylate resin is preferably selected from the group consisting of a (meth)acrylate resin, a polyurethane (meth)acrylate resin, an epoxy (meth)acrylate resin, and mixtures thereof, preferably the (meth)acrylate resin is a polyurethane (meth)acrylate resin.

Suitable polyurethane (meth)acrylate resin may be a di- or tri- or multi- functional polyurethane acrylate resin, preferably an aliphatic polyether polyurethane (meth)acrylate resin.

Suitable polyurethane (meth)acrylate resin for use in the present invention includes oligomers having a number average molecular weight of from 500 to 100000 Mn, preferably from 2500 to 25000 Mn. The number average molecular weight can be measured by gel permeation chromatography (GPC) calibrated against polystyrene standards in accordance with DIN 55672-1:2007-08 at 35°C, unless otherwise stipulated.

An example of a suitable polyurethane (meth)acrylate resin is BR-582E8 from Dymax Corporation, which is described as an aliphatic urethane acrylate oligomer having a polyether backbone. Another example is the polyurethane methacrylate resin which is described as cyclohexanol, 4,4-(1 - methylethylidene)bis- polymer with 1 ,3-disocyanatomethylbenzene and tetrahydrofuran, propylene glycol monomer. Combinations of these two polyurethane (meth)acrylate resins may be used. When used in combination, they may be used in a weight ratio of 2.5:1 to 1.0.

The (meth)acrylate resin may be present in the light induced redox curing composition according to present invention in a quantity from 10 to 35% by weight of the total weight of the of the composition, preferably from 15 to 30% and more preferably from 18 to 26%.

The above preferred ranges are ideal especially in combination with the preferred (meth)acrylate monomer quantities leading to the ideal overall quantity of a curable component in relation to the hydroperoxide and the cationic photoinitiator quantities to provide ideal open time (time after the end of the UV/Vis exposure in which the formulation is still liquid enough to be able to be bonded) to an un-usable short time (less than one second).

The light induced redox curing composition according to present invention comprises a cationic photoinitiator.

The metal based initiators are not required to be metallocene based initiators for the composition according to the present invention to work, as evidenced by the use of R-GEN 262 [(η-cumene)-(η-cyclopentadienyl)iron(II) hexaflouroantimonate] in the example section below.

The cationic photoinitiator may be a salt represented by the formula A⁺B⁻ which produces cationic active species by irritation of light. A⁺ may be any actinic radiation absorbing cationic material including aromatic iodonium ions, aromatic sulfonium ions and aromatic iron ions that may be coupled to anion B⁻. And B⁻ may be any anionic species that forms a stable pairing with A⁺.

Suitable cationic photoinitiator for use in the present invention may have the cation A⁺ selected from the group consisting of aromatic iodonium ions, aromatic sulfonium ions and aromatic iron ions, and the anion B selected from the group consisting of SbF⁻₆, PF⁻₆, AsF⁻₆ and B(Aryl)⁻₄, B(C₆F₅)₄⁻, B(C₆F₄OCF₃)₄⁻ and B(C₆F₄CF₃)₄⁻.

The cationic photoinitiator may be selected from the group consisting of a mixture of thiobis(4,1-phenylene)-S,S,S',S'-tetraphenyldisulfonium bishexafluorophosphate and diphenyl(4-phenylthiophenyl)sulfonium hexafluorophosphate; iodonium, (4-methylphenyl)[4-(2- methylpropyl) phenyl]-, hexafluorophosphate(1-), 9H-thioxanthenium, 10-[1,1' biphenyl]-4-yl-2-(1-methylethyl)-9-oxo, hexafluorophosphate; bis[a-n-alkyl(C10~13)phenyl]iodonium hexafluoroantimonate; diphenyl-(4-phenylsulfide) phenylsulfonium hexafluoroantimonate; diphenyl[4-(phenylthio)phenyl]sulfonium hexafluorophosphate; a mixture of diphenyl (4-phenylthio)phenylsulfonium hexafloroatimonate and (thiodi-4,1-phenylene)bis(diphenylsulfonium) dihexafluoroatimonate; diphenyl-(4-phenylsulfide) phenylsulfonium hexafluorophosphate; bis(4-methylphenyl)iodonium hexafluorophosphate; 4-isopropyl-4'-methyl diphenyl iodide tetrakis (pentafluorophenyl) borate; 7-oxabicyclo[4.1.0]hept-3-ylmethyl 7-oxabicyclo[4.1.0]heptane-3-carboxylate; bis((3,4-epoxycyclohexyl)methyl) adipate; (p-isopropylphenyl)(p-methylphenyl)idonium tetrakis(pentafluorophenyl)borate; tris{4-[(4-acetylphenyl)sulfanyl]phenyl}sulfonium hexafluorophosphate; a mixture of bis[4-diphenylsulfoniumphenyl]sulfide-bishexafluoroantimonate and thiophenoxyphenyl sulfonium hexafluoroantimonate; tris(4-((4-acetylphenyl)thio)phenyl)-sulfonium tetrakis(perfluorophenyl) borate; bis[4-n-alkyl(C10-13)phenyl]iodonium hexafluorophosphate; (η5 -2,4-cyclopentadien-1-yl)[(1,2,3,4,5,6-η)-(1-methylethyl)benzene]-iron(I)- hexafluoroantimonate; and mixtures thereof.

In a preferred embodiment the cationic photoinitiator is selected from the group consisting of (p-isopropylphenyl)(p-methylphenyl)idonium tetrakis(pentafluorophenyl)borate, tris{4-[(4-acetylphenyl)sulfanyl]phenyl}sulfonium hexafluorophosphate, a mixture of bis[4-diphenylsulfoniumphenyl]sulfide-bishexafluoroantimonate and thiophenoxyphenyl sulfonium hexafluoroantimonate, tris(4-((4-acetylphenyl)thio)phenyl)-sulfonium tetrakis(perfluorophenyl) borate, bis[4-n-alkyl(C10-13)phenyl]iodonium hexafluorophosphate, (η5 -2,4-cyclopentadien-1-yl)[(1,2,3,4,5,6-η)-(1-methylethyl)benzene]-iron(I)- hexafluoroantimonate, and mixtures thereof.

Suitable commercially available cationic photoinitiators for use in the present invention include but are not limited to Speedcure 939 from Arkema/Sartomer, Irgacure 270 and Irgacure (PAG) 290 from BASF, CPI6976 from Aceto Corp. (Also known as Cyracure Photoinitiator UVI6976 from DOW/Univar), WPI 113 from Fujifilm/Wako and Rgen262 from Chitec.

The cationic photoinitiator may be present in the light induced redox curing composition according to the present invention in a quantity from 0.5 to 15% by weight of the total weight of the composition, preferably from 5 to 13%, and more preferably from 7 to 11%.

The above defined quantities are ideal, because too low quantities, less than 0.5%, may lead to too long cure time and no cure at all, whereas too high quantities, more than 15%, may negatively impact to the open time (time after the end of the UV/Vis exposure in which the formulation is still liquid enough to be able to be bonded) to an un-usable short time (less than one second).

The light induced redox curing composition according to the present invention comprises a hydroperoxide.

While certain peroxides - such as dialkyl peroxides - have been disclosed as useful initiators and indeed may have utility herein, hydroperoxides represent a preferred class of initiators for the present invention. Further, whilst hydrogen peroxide itself may be used; the most desirable polymerization initiators are the organic hydroperoxides. For completeness, included within the definition of hydroperoxides are materials such as organic peroxides or organic peresters which decompose or hydrolyze to form organic hydroperoxides *in situ*: examples of such peroxides and peresters are cyclohexyl and hydroxycyclohexyl peroxide and t-butyl perbenzoate, respectively.

Suitable hydroperoxide for use in the present invention is represented by the formula:

R²OOH

wherein R² is a hydrocarbon group containing up to 18 carbon atoms, preferably R² is a C₁-C₁₂ alkyl, C₃-C₁₂ cycloalkyl, C₆-C₁₈ aryl or C₆-C₁₈ aralkyl group.

Preferably the hydroperoxide is selected from the group consisting of cumene hydroperoxide (CHP), para-menthane hydroperoxide, t-butyl hydroperoxide (TBH), t-amyl hydroperoxide, 1,2,3,4-tetramethylbutyl hydroperoxide and mixtures thereof, and more preferably the hydroperoxide is paramenthane hydroperoxide.

The hydroperoxides are preferred because they provide strongest bonds on mild steel, and paramenthane hydroperoxide is also preferred due its safety profile.

Suitable commercially available peroxide for use in the present invention include but is not limited to Luperox PMHP from Arkema.

The hydroperoxide may be present in the light induced redox curing composition according to the present invention in a quantity from 1 to 15% by weight of the total weight of the composition, preferably from in an amount 1.5 to 12%, and more preferably from 3 to 10%.

These quantities are preferred because they provide ideal cure profile. Too low quantities, less than 1% may lead too long cure time and no cure at all, whereas too high quantities, more than 15%, may lead to cure instantaneously on exposure to the UV radiation and the composition may be less stable.

The light induced redox curing composition according to the present invention may further comprise an antioxidant.

The antioxidant may be used to prevent colouring (yellowing) and to provide additional stability to the composition.

Preferably the antioxidant is selected from the group consisting of butylhydroxytoluene, octadecyl-3,5-bis(1,1-dimethyl)-4-hydroxybenzene-propanoate, tris(2,4-di-tert.-butylphenyl) phosphite, pentaerythritol tetrakis(3-(3,5-di-tert-butyl-4-hydroxyphenyl)propionate), pyrogallol triphenyl phosphite, tris(nonylphenyl)phosphite, dilauryl thiodipropionate, and mixtures thereof.

Suitable commercially available antioxidant for use in the present invention include but is not limited to butylhydroxytoluene (BHT) from Lanxess.

The antioxidant may be present in the light induced redox curing composition according to the present invention in a quantity from 0.01 to 2% by weight of the total weight of the composition, preferably from 0.01 to 1%, and more preferably from 0.05 to 0.5%.

The above defined quantities are preferred because they may provide anti colouring effect and stability without adversely affecting other properties of the composition like for example cure rate.

The light induced redox curing composition according to the present invention may further comprise a photoinitiator.

Suitable photoinitiator may work as sensitiser increasing the activity of the cationic photoinitiator at wavelengths of UV/Vis radiation where the cationic photoinitiator are poor absorbers of UV/Vis radiation or where the cationic photoinitiator does not absorb UV/Vis radiation.

Suitable photoinitiator is preferably selected from the group consisting of isopropyl thioxanthone, 1-hydroxycyclohexyl phenyl ketone, ethyl phenyl benzoyl phosphinate, 2-hydroxy-2-methyl-1-phenyl-propan-1-one, bis(2,4,6-trimethylbenzoyl)-phenylphosphineoxide, 1-hydroxy-cyclohexyl-phenyl-ketone, 2,4,6-trimethylbenzoyl-diphenyl-phosphineoxide, 2-methyl-1-[4-(methylthio)phenyl]-2-morpholino propan-1-one, 2-benzyl-2-N,N-dimethylamino- 1-(4-morpholinophenyl)-1-butanone, combination of 1-hydroxy cyclohexyl phenyl ketone and benzophenone, 2,2-dimethoxy-2-phenyl acetophenone, 2-hydroxy-2-methyl-1-phenyl-1-propane, combination of 2,4,6-trimethylbenzoyldiphenyl-phosphine oxide and 2-hydroxy-2-methyl-1-phenyl-propan-1-one, 1-[4-(2-hydroxyethoxy)-phenyl]-2-hydroxy-2-methyl-1-propane-1-one, combination of 50 wt. % of diphenyl (2,4,6-trimethylbenzoyl) phosphine oxide and 50 wt. % of2-hydroxy-2-methyl-1-phenyl-1 -propanone, combination of bis(2,6-dimethoxybenzoyl-2,4,4-trimethylpentyl)phosphine oxide and 2-hydroxy-2-methyl-1-phenyl-propan-1-one, bis(η<5>-2,4-cyclopentadien-1-yl)-bis[2,6-difluoro-3-(1H-pyrrol-1-yl)phenyl]titanium, 2-benzyl-2-N,N-dimethylamino-1-(4-morpholinophenyl)-1-butanone, di-camphorquinone, and mixtures thereof.

The photoinitiator may be present in the light induced redox curing composition according to the present invention in a quantity from 0.1 to 10% by weight of the total weight of the composition, preferably from 0.5 to 5%, and more preferably from 1 to 3%.

The light induced redox curing composition according to the present invention may further comprise an additive selected from the group consisting of stabilisers, fillers, adhesion promoters and mixtures thereof.

Such additives can be used in such combination and proportions as desired, provided they do not adversely affect the nature and essential properties of the composition.

The additive may be present in the light induced redox curing composition according to the present invention in a quantity from 0.01 to 10% by weight of the total weight of the composition, preferably from 0.5 to 5%.

The light induced redox curing composition according to the present invention may further comprise a stabilizer. Stabilizers may, in particular, be employed to control, inhibit or prevent premature activation of the free radical initiator: they may, for instance, inhibit or prevent hydroperoxide decomposition. Exemplary stabilizers include hydroquinones, benzoquinones, naphthoquinones, phenanthroquinones, anthraquinones and substituted compounds thereof. Various phenols may also be used as stabilizers, such as 2,6-di-t-butyl-4-methyl phenol. Conventionally stabilizers are used in a quantity of from 0.01 to 1.0 wt.%, based on the total weight of the composition.

The light induced redox curing composition according to the present invention may further comprise a filler. The light induced redox curing composition may, for instance, contain from 0.01 to 10 wt.% or from 0.5 to 10 wt.% of filler, based on the weight of the composition.

Broadly, there is no particular intention to limit the shape of the particles employed as fillers: particles that are acicular, spherical, ellipsoidal, cylindrical, bead-like, cubic or platelet-like may be used alone or in combination. Moreover, it is envisaged that agglomerates of more than one particle type may be used. Equally, there is no particular intention to limit the size of the particles employed as fillers. However, such fillers will conventionally have an average volume particle size, as measured by laser diffraction / scattering methods, of from 0.1 to 1500 µm, for example from 1 to 1250 µm.

Exemplary fillers include but are not limited to calcium carbonate, calcium oxide, calcium hydroxide (lime powder), fumed silica, amorphous silica, precipitated and/or pyrogenic silica, zeolites, bentonites, wollastonite, magnesium carbonate, diatomite, barium sulfate, alumina, clay, talc, titanium oxide, iron oxide, zinc oxide, sand, quartz, flint, mica, glass beads, glass powder, and other ground mineral substances. Organic fillers can also be used, in particular wood fibres, wood flour, sawdust, cellulose, cotton, pulp, cotton, wood chips, chopped straw, chaff, ground walnut shells, and other chopped fibres. Short fibres such as glass fibres, glass filament, polyacrylonitrile, carbon fibres, Kevlar fibres, or polyethylene fibres can also be added.

The light induced redox curing composition according to the present invention may further comprise an adhesion promoter. In this regard, the composition may comprise from 0.01 to 5 wt.%, for example from 0.5 to 5 wt.% based on the weight of the composition, of at least one adhesion promoter.

In certain embodiments, the adhesion promoter may be selected from the group consisting of: morin(2-(2,4-dihydroxy phenyl)-3,5,7-trihydroxy-4H-1-cumarone-4-ketone); 3,7-dihydroxy-2-naphthoic acid (3,7-dihydroxy naphthlene-2-carboxylic acid); pyrogallol carboxylic acid (2,3,4-trihydroxybenzoic acid); 3,4-dihydroxy-benzene guanidine-acetic acid; gallic acid (3,4,5-trihydroxybenzoic acid); para-aminosalicylic acid (4-amino-2-hydroxybenzoic acid, PAS); flutter acid (4,4'-methylene-bis(3-hydroxy-2-naphthoic acid)); citric acid (2-hydroxypropane-1,2,3-tricarboxylic acid); 3-Glycidyloxypropyl)trimethoxsilane; methacryloxyl propyl trimethoxy silane; siloxane polyalkyleneoxide copolymer; and, mixtures thereof.

As alternative adhesion promoters there may be mentioned: (meth)acrylic acid; Ebecryl 168, methacrylated acidic adhesion promoter commercially available from Radcure Corporation; Esstech PL-2152, methacrylate based adhesion promoter, available from Esstech; Ebecryl 170, acrylated acidic adhesion promoter commercially available from Radcure Corporation; β-carboxyacryiate; Sartomer CN 704, acrylated polyester adhesion promoter available from Sartomer Corporation; and, CD9050, monofunctional acid ester CD 9052, available from Sartomer Corporation; CD 9052, trifunctional acid ester commercially available from Sartomer Corporation; 2-(methacryloyloxy)ethyl succinate (HEMA succinate); and, zinc diacrylate.

The composition according to the present invention can be prepared by combining all the components of the composition, except the hydroperoxide, and mixing them together. The mixing can be fast, and it may generate some heat. Once components are properly mixed and the mixture is either a) at room temperature, or b) cooled back to room temperature the hydroperoxide is carefully mixed in.

The present invention relates to a cured adhesive product obtained by curing the light induced redox curing composition according to the present invention.

The composition according to the present invention is exposed to UV/Vis radiation to activate the cure at the room temperature. It is noted that an ordinary UV curable composition stops curing upon removal of UV light, but the composition according to the present invention continues to cure after removal of UV light.

UV/Vis exposure may be made by from 200 to 800 nm LED lamp or Mercury Bulb at an intensity from 50 mW/cm² to 4 W/cm² for a duration of from 0.1 seconds to 60 seconds. Full cure is achieved in about 24 hours.

The present invention relates to an article comprising the light induced redox curing composition or the cured adhesive product according to the present invention.

The adhesive can be coated onto the first substrate and then exposed to UV radiation to activate the cure. The composition according to the present invention shows delayed onset of cure after activation/exposure to UV radiation allowing assembly of materials to be bonded post activation. The bond is subsequently assembled, and it cures at room temperature or can be accelerated with the application of heat.

Suitable substrates are for example electrocoated steel, PVC, aluminium, stainless steel, mild steel, PMMA, nickel, PC, Nylon (PA) and zinc.

The present invention encompasses use of light induced redox curing composition or cured adhesive product according to the present invention in electrocoated steel bonding.

### Examples

The example compositions were prepared by combining all the components of the composition, except the hydroperoxide, and mixing them together. The mixing generated some heat, and once components were properly mixed and the mixture was cooled back to room temperature the hydroperoxide was carefully mixed in.

All bonding in the below examples were made by the same method. The adhesive was applied to the first substrate at a thickness between 10 µm and 500 µm. The coated substrate was subsequently exposed to UV/Vis radiation (time/intensity/wavelengths are described in each example) and the bond was assembled. The bond was then either heated for a time at temperature described in the examples or the bond was left for at least 18 hours before testing. All bonds were 1.27 cm (1/2") overlap lap shear bonds tested at 2 mm/min on a calibrated tensile testing machine according to ASTM D1002. In all examples, the testing was carried out on mild steel, with any testing on other substrates is noted.

The fixture times, refers to ASTM D1144-99, gives an indication of the time between when the bond is assembled and when the bond can be handled without clamps/support. The method used for fixture time is as follows: The adhesive was applied to the first substrate at a thickness between 10µm and 500µm. The coated substrate was subsequently exposed to UV/Vis radiation (time/intensity/wavelengths are described in each example) and the bond was assembled. The time for the bond to reach 0.1MPa was measured and recorded as the fixture time.

The compositions may be applied to a substrate by any method such as an applicator stick, brushing and spraying. The application stick was used in the examples.

### Example 1

The composition was prepared in accordance with Table 1 herein below, wherein the given percentage by weight is stated with respect to the composition.

**Table 1**

| Composition 1 | |
|---|---|
| | % |
| 2-hydroxyethyl methacrylate from Geo speciality chemicals | 47.9 |
| Polyurethane methacrylate resin CAS: 2243075-64-9 manufactured and used by Henkel | 22.3 |
| Isobornyl methacrylate from Evonik | 5.5 |
| Hydroxypropyl methacrylate from Geo speciality chemicals | 1.8 |
| Acrylic acid from Univar | 4.8 |
| Paramenthane hydroperoxide from Arkema | 6.4 |
| Butyl hydroxyltoluene (BHT) from BASF | 0.1 |
| Speedcure 939 from Lambson | 9.1 |
| ITX from IGM Resins | 2.1 |

The composition 1 was used in bonds which were made with 10 second activation at 1.4 W/cm² from a 405nm LED lamp. Five bonds were made with allowing cure to proceed at RT for 18 hours before testing. To ensure the UV activation was required five bonds were also assembled and allowed to cure for 18 hours at RT without UV activation. The strengths are reported in table 2 below.

**Table 2**

| | No Activation | 10 seconds (MPa) |
|---|---|---|
| Bond 1 | no cure | 11.10 |
| Bond 2 | no cure | 1.50 |
| Bond 3 | no cure | 15.50 |
| Bond 4 | no cure | 14.10 |
| Bond 5 | no cure | 10.80 |

Five bonds were made each first UV activated 10 seconds at 1.4 W/cm² and followed by heating at 60 °C for 15 min, 30 min and 60 min and subsequently allowed to fully cure at RT for 18 hours before testing. The strengths are reported in table 3 below.

**Table 3**

| | 15 min (MPa) | 30 min (MPa) | 60 min (MPa) |
|---|---|---|---|
| Bond 1 | 26.6 | 24.4 | 22.8 |
| Bond 2 | 24.0 | 23.4 | 24.1 |
| Bond 3 | 24.4 | 21.2 | 24.4 |
| Bond 4 | 24.0 | 21.4 | 21.8 |
| Bond 5 | 22.0 | 23.0 | 21.9 |

10 seconds exposure at 1.4 W/cm2 from a 405nm LED lamp gave a fixture strength of 0.1 MPa after 45 minutes at RT. With 10 seconds of seconds UV + 5 minutes at 60 °C also gave a fixture strength of 0.1 MPa.

### Example 2

The composition was prepared in accordance with Table 4 herein below, wherein the given percentage by weight is stated with respect to the composition.

**Table 4**

| Composition 2 | |
|---|---|
| | % |
| 2-hydroxyethyl methacrylate from Geo speciality chemicals | 47.9 |
| Polyurethane methacrylate resin CAS: 2243075-64-9 manufactured and used by Henkel | 22.3 |
| Isobornyl methacrylate from Evonik | 5.5 |
| Hydroxypropyl methacrylate from Geo speciality chemicals | 1.8 |
| Acrylic acid from Univar | 4.8 |
| Paramenthane hydroperoxide from Arkema | 6.4 |
| Butyl hydroxyltoluene (BHT) from BASF | 0.1 |
| Irgacure 270 from BASF | 9.1 |
| ITX from IGM Resins | 2.1 |

Bonds were made with five second activation at 1.4 W/cm² from a 405nm LED lamp. Five bonds were made with allowing cure to proceed at RT for 48 hours before testing. To ensure the UV activation was required five bonds were also assembled and allowed to cure for 18 hours at RT without UV activation. The strengths are reported in table 5 below.

**Table 5**

| | No Activation | 5 seconds (MPa) |
|---|---|---|
| Bond 1 | no cure | 2.60 |
| Bond 2 | no cure | 6.09 |
| Bond 3 | no cure | 6.05 |
| Bond 4 | no cure | 5.17 |
| Bond 5 | no cure | 6.10 |

Using 5 seconds exposure at 1.4 W/cm² from a 405 nm LED it took more than 2 hours to reach a fixture strength of 0.1 MPa at RT.

### Example 3

The composition was prepared in accordance with Table 6 herein below, wherein the given percentage by weight is stated with respect to the composition.

**Table 6**

| Composition 3 | |
|---|---|
| | % |
| 2-hydroxyethyl methacrylate from Geo speciality chemicals | 47.9 |
| Polyurethane methacrylate resin CAS: 2243075-64-9 manufactured and used by Henkel | 22.3 |
| Isobornyl methacrylate from Evonik | 5.5 |
| Hydroxypropyl methacrylate from Geo speciality chemicals | 1.8 |
| Acrylic acid from Univar | 4.8 |
| Paramenthane hydroperoxide from Arkema | 6.4 |
| Butyl hydroxyltoluene (BHT) from BASF | 0.1 |
| CPI6976 from Aceto Corp. | 9.1 |
| ITX from IGM Resins | 2.1 |

Bonds were made with 5 second activation at 1.4 W/cm² from a 405nm LED lamp. Five bonds were made with allowing cure to proceed at RT for 48 hours before testing. To Ensure the UV activation was required five bonds were also assembled and allowed to cure for 18 hours at RT without UV activation. The strengths are reported in table 7 below.

**Table 7**

| | No Activation | 5 seconds (MPa) |
|---|---|---|
| Bond 1 | no cure | 7.73 |
| Bond 2 | no cure | 5.17 |
| Bond 3 | no cure | 6.55 |
| Bond 4 | no cure | 5.35 |
| Bond 5 | no cure | 1.64 |

Using five seconds exposure at 1.4 W/cm2 from a 405nm LED it took more than 2 hours to reach a fixture strength of 0.1 MPa at RT.

### Example 4

The composition was prepared in accordance with Table 8 herein below, wherein the given percentage by weight is stated with respect to the composition.

**Table 8**

| Composition 4 | |
|---|---|
| | % |
| 2-hydroxyethyl methacrylate from Geo speciality chemicals | 48.8 |
| Polyurethane methacrylate resin CAS: 2243075-64-9 manufactured and used by Henkel | 22.8 |
| Isobornyl methacrylate from Evonik | 5.7 |
| Hydroxypropyl methacrylate from Geo speciality chemicals | 1.8 |
| Acrylic acid from Univar | 4.8 |
| Paramenthane hydroperoxide from Arkema | 6.6 |
| Butyl hydroxyltoluene (BHT) from BASF | 0.1 |
| Irgacure 270 from BASF | 9.4 |

Bonds made with two second activation at 1.4 W/cm² from a 405nm LED lamp. Five bonds were made with allowing cure to proceed at RT for 48 hours before testing. To Ensure the UV activation was required five bonds were also assembled and allowed to cure for 18 hours at RT without UV activation. The strengths are reported in table 9 below.

**Table 9**

| | No Activation | 2 seconds (MPa) |
|---|---|---|
| Bond 1 | no cure | 10.80 |
| Bond 2 | no cure | 12.90 |
| Bond 3 | no cure | 8.58 |
| Bond 4 | no cure | 9.53 |
| Bond 5 | no cure | 10.90 |

Using two seconds exposure at 1.4W/cm2 from a 405nm LED gives a fixture strength of 0.1MPa after ten minutes at RT.

### Example 5

The composition was prepared in accordance with Table 10 herein below, wherein the given percentage by weight is stated with respect to the composition.

**Table 10**

| Composition 5 | |
|---|---|
| | % |
| 2-hydroxyethyl methacrylate from Geo speciality chemicals | 47.9 |
| Polyurethane methacrylate resin CAS: 2243075-64-9 manufactured and used by Henkel | 22.3 |
| Isobornyl methacrylate from Evonik | 5.5 |
| Hydroxypropyl methacrylate from Geo speciality chemicals | 1.8 |
| Acrylic acid from Univar | 4.8 |
| Paramenthane hydroperoxide from Arkema | 6.4 |
| Butyl hydroxyltoluene (BHT) from BASF | 0.1 |
| Irgacure (PAG) 290 from BASF | 9.1 |
| ITX from IGM Resins | 2.1 |

Bonds made with five seconds activation at 1.4 W/cm² from a 405 nm LED lamp. Five bonds were made with allowing cure to proceed at RT for 48 hours before testing. To ensure the UV activation was required five bonds were also assembled and allowed to cure for 18 hours at RT without UV activation. The strengths are reported in table 7 below.

**Table 11**

| | No Activation | 5 seconds (MPa) |
|---|---|---|
| Bond 1 | no cure | 3.81 |
| Bond 2 | no cure | 3.19 |
| Bond 3 | no cure | 6.15 |
| Bond 4 | no cure | 6.02 |
| Bond 5 | no cure | 5.13 |

Using five seconds exposure at 1.4 W/cm2 from a 405 nm LED it took more than two hours to reach a fixture strength of 0.1 MPa at RT.

### Example 6

The composition was prepared in accordance with Table 12 herein below, wherein the given percentage by weight is stated with respect to the composition.

**Table 12**

| Composition 6 | |
|---|---|
| | % |
| 2-hydroxyethyl methacrylate from Geo speciality chemicals | 47.9 |
| Polyurethane methacrylate resin CAS: 2243075-64-9 manufactured and used by Henkel | 22.3 |
| Isobornyl methacrylate from Evonik | 5.5 |
| Hydroxypropyl methacrylate from Geo speciality chemicals | 1.8 |
| Acrylic acid from Univar | 4.8 |
| Paramenthane hydroperoxide from Arkema | 6.4 |
| Butyl hydroxyltoluene (BHT) from BASF | 0.1 |
| WPI 113 from Fujifilm/Wako | 9.1 |
| ITX from IGM Resins | 2.1 |

Bonds made with two seconds activation at 1.4 W/cm² from a 405 nm LED lamp. Five bonds were made with allowing cure to proceed at RT for 48 hours before testing. To ensure the UV activation was required five bonds were also assembled and allowed to cure for 18 hours at RT without UV activation. The strengths are reported in table 13 below.

**Table 13**

| | No Activation | 2 seconds (MPa) |
|---|---|---|
| Bond 1 | no cure | 7.39 |
| Bond 2 | no cure | 4.47 |
| Bond 3 | no cure | 4.82 |
| Bond 4 | no cure | 5.51 |
| Bond 5 | no cure | 3.97 |

Using five seconds exposure at 1.4 W/cm2 from a 405 nm LED it took 1.5 hours to reach a fixture strength of 0.1 MPa at RT.

### Example 7

The composition was prepared in accordance with Table 14 herein below, wherein the given percentage by weight is stated with respect to the composition.

**Table 14**

| Composition 7 | |
|---|---|
| | % |
| 2-hydroxyethyl methacrylate from Geo speciality chemicals | 50.9% |
| Polyurethane methacrylate resin CAS: 2243075-64-9 manufactured and used by Henkel | 23.8% |
| Isobornyl methacrylate from Evonik | 5.9% |
| Hydroxypropyl methacrylate from Geo speciality chemicals | 1.9% |
| Acrylic acid from Univar | 2.7% |
| Paramenthane hydroperoxide from Arkema | 5.0% |
| Rgen 262 from Chitec | 9.8% |

Bonds made with two seconds activation at 1.4 W/cm² from a 405 nm LED lamp. Five bonds were made with allowing cure to proceed at RT for 18 hours before testing. To ensure the UV activation was required five bonds were also assembled and allowed to cure for 18 hours at RT without UV activation. An extra five bonds were made with UV activation (two seconds activation at 1.4 W/cm2 from a 405 nm LED lamp) and then heating the assembled bonds to 60 °C for one hour followed by 18 hours at RT. The strengths are reported in table 15 below.

**Table 15**

| | No Activation | 2 seconds (MPa) | Mild steel UV, 1 hour at 60°C |
|---|---|---|---|
| Bond 1 | 1.18 | 11.80 | 16.40 |
| Bond 2 | 0.97 | 12.60 | 17.00 |
| Bond 3 | 1.98 | 8.68 | 16.30 |
| Bond 4 | 1.26 | 10.60 | 15.30 |
| Bond 5 | 1.21 | 10.60 | 16.50 |

Without the stabiliser (butyl hydroxyltoluene) this formulation partially cures weakly, suggesting that ambient light may be enough to initiate the cure, however with the higher intensity activation the strength of cure increases significantly.

Using two seconds exposure at 1.4 W/cm2 from a 405 nm LED it took one minute to reach a fixture strength of 0.1 MPa at RT.

Composition 7 was also tested on two grades of C5 E-coated electrical steel M250 and M500), with UV activation (two seconds at 1.4 W/cm²) with and without post cure at 60°C. The results are reported in table 16 below (all cures allowed 18 hours at RT before testing).

**Table 16**

| Substrate/ Cure | M250 E-Coated Steel, UV | M250 E-Coated Steel, UV + 5min at 60°C | M250 E-Coated Steel, UV + 10min at 60°C | M400 E-Coated Steel, UV | M400 E-Coated Steel, UV + 5min at 60°C | M400 E-Coated Steel, UV + 10min at 60°C |
|---|---|---|---|---|---|---|
| Average | 2.0 | 1.5 | 1.4 | 6.8 | 8.4 | 7.1 |
| St. Dev | 0.5 | 0.4 | 0.2 | 1.8 | 1.8 | 3.1 |

Composition 7 was also tested on PVC, PMMA, aluminium and stainless steel with the same two seconds activation at 1.4 W/cm² from a 405 nm LED lamp. The results are reported in Table 17 below.

**Table 17**

| Substrate/Cure | PVC | PMMA | Aluminium | Stainless steel |
|---|---|---|---|---|
| Average | 2.1 | 1.0 | 3.2 | 4.5 |
| St.Dev. | 1.1 | 0.3 | 2.9 | 2.1 |

On PVC the fail mode was substrate failure, on all other tests the fail mode was adhesive.

### Example 8

The composition was prepared in accordance with Table 18 herein below, wherein the given percentage by weight is stated with respect to the composition

**Table 18**

| Composition 8 | |
|---|---|
| | % |
| 2-hydroxyethyl methacrylate from Geo speciality chemicals | 53.6% |
| Polyurethane methacrylate resin CAS: 2243075-64-9 manufactured and used by Henkel | 23.8% |
| Isobornyl methacrylate from Evonik | 5.9% |
| Hydroxypropyl methacrylate from Geo speciality chemicals | 1.9% |
| Paramenthane hydroperoxide from Arkema | 5.0% |
| Rgen 262 from Chitec | 9.8% |

Bonds were made with two seconds activation at 1.4 W/cm² from a 405 nm LED lamp. Five bonds were made with allowing cure to proceed at RT for 18 hours before testing. To ensure the UV activation was required five bonds were also assembled and allowed to cure for 18 hours at RT without UV activation. An extra five bonds were made with UV activation (two seconds activation 1.4 W/cm² from a 405 nm LED lamp) and subsequently heating the assembled bonds to 60 °C for one hour followed by 18 hours at RT. Strengths are reported in table 19.

**Table 19**

| | No Activation | 2 seconds (MPa) | Mild steel UV, 1 hour at 60°C |
|---|---|---|---|
| Bond 1 | 0.00 | 7.82 | 8.16 |
| Bond 2 | 0.00 | 11.84 | 9.66 |
| Bond 3 | 0.00 | 14.24 | 16.10 |
| Bond 4 | 0.00 | 12.70 | 4.30 |
| Bond 5 | 0.00 | 13.35 | 15.21 |

Without the stabiliser (butyl hydroxyltoluene) and the acrylic acid the composition does not cure in the bond line, but with the UV activation the material of cures well. Unlike the composition 7 above there was no significant increase in strength with the application of heat.

Using two seconds exposure at 1.4 W/cm2 from a 405 nm LED it took 2 minutes to reach a fixture strength of 0.1 MPa at RT.

Composition 8 was also tested on two grades of C5 E-coated electrical steel M250 and M500), with UV activation (two seconds at 1.4 W/cm²) followed by 18 hours at RT). Results are reported in table 20 below.

**Table 20**

| Substrate | M250 E-Coated Steel | M400 E-Coated Steel |
|---|---|---|
| Average | 6.8 | 9.9 |
| St. Dev | 3.2 | 1.8 |

Composition 8 was also tested on PVC, PMMA, PA, Aluminium and Stainless steel and Nickel with the same two seconds activation at 1.4 W/cm² from a 405 nm LED lamp. The results are reported in table 21.

**Table 21**

| Substrate | PVC | PMMA | Nylon | Aluminium | Stainless steel | Nickel |
|---|---|---|---|---|---|---|
| Average | 2.8 | 1.4 | 1.9 | 8.2 | 14.5 | 8.4 |
| St. Dev | 0.7 | 0.4 | 0.5 | 0.7 | 4.5 | 3.3 |

On PVC the fail mode was substrate failure, on all other tests the fail mode was adhesive.

Composition 8 was also tested on glass with 0.635 cm (¼") overlap. Here the bonds were made by two methods:
Method A: the adhesive was applied and activated for two seconds at 1.4 W/cm² from a 405nm LED lamp and then the bonds assembled and allowed to cure overnight at RT.
Method B: The adhesive was applied; the bonds were assembled, and the assembled bonds were irradiated at two seconds at 1.4 W/cm² from a 405 nm LED lamp. The bonds were then allowed to cure overnight at RT.

### The results are reported in table 22 below.

**Table 22**

| Substrate/Cure | Method A | Method B |
|---|---|---|
| Bond 1 | 11.97 | 0.058 |
| Bond 2 | 7.76 | 0.002 |
| Bond 3 | 13.83 | 0 |
| Bond 4 | 5.86 | 0 |
| Bond 5 | 14.58 | 0 |
| Average | 10.8 | 0.0 |
| St.Dev | 3.8 | 0.0 |
| Fail Type | Substrate Failure | Uncured Adhesive |

For the bonds made by method B only the fillet cured, inside the bond-line was completely uncured indicating that the adhesive will work with UV activation followed by bond and cure, but it will not UV cure in the classic UV cure adhesive sense (aka cure in the bond-line while being exposed to UV radiation.

### Example 9

The composition was prepared in accordance with Table 23 herein below, wherein the given percentage by weight is stated with respect to the composition.

**Table 23**

| Composition 9 | |
|---|---|
| | % |
| 2-hydroxyethyl methacrylate from Geo speciality chemicals | 53.6% |
| Polyurethane methacrylate resin CAS: 2243075-64-9 manufactured and used by Henkel | 23.8% |
| Isobornyl methacrylate from Evonik | 5.9% |
| Hydroxypropyl methacrylate from Geo speciality chemicals | 1.9% |
| Cumene hydroperoxide from Nouryon | 5.0% |
| Rgen 262 from Chitec | 9.8% |

Bonds were made with two seconds activation at 1.4 W/cm² from a 405nm LED lamp. Five bonds were made with allowing cure to proceed at RT for 48 hours before testing. To ensure the UV activation was required five bonds were also assembled and allowed to cure for 18 hours at RT without UV activation. Strengths are reported in table 24 below.

**Table 24**

| | No Activation | 2 seconds (MPa) |
|---|---|---|
| Bond 1 | 1.00 | 6.20 |
| Bond 2 | 1.68 | 7.65 |
| Bond 3 | 0.23 | 8.42 |
| Bond 4 | 1.45 | 11.69 |
| Bond 5 | 0.94 | 14.77 |

Using two seconds exposure at 1.4 W/cm² from a 405 nm LED it took 2 minutes to reach a fixture strength of 0.1MPa at RT.

These bonds without activation give a low bond strength which is significantly improved by the activation for two seconds at 1.4 W/cm² from a 405 nm LED.

### Example 10

The composition was prepared in accordance with Table 25 herein below, wherein the given percentage by weight is stated with respect to the composition.

**Table 25**

| Composition 10 | |
|---|---|
| | % |
| 2-hydroxyethyl methacrylate from Geo speciality chemicals | 53.6% |
| Polyurethane methacrylate resin CAS: 2243075-64-9 manufactured and used by Henkel | 23.8% |
| Isobornyl methacrylate from Evonik | 5.9% |
| Hydroxypropyl methacrylate from Geo speciality chemicals | 1.9% |
| tert-Butyl hydroperoxide; 70% aqueous solution from ABCR | 5.0% |
| Rgen 262 from Chitec | 9.8% |

Bonds were made with two seconds activation at 1.4 W/cm² from a 405 nm LED lamp. Five bonds were made with allowing cure to proceed at RT for 48 hours before testing. To ensure the UV activation was required five bonds were also as assembled and allowed to cure for 18 hours at RT without UV activation. Strengths are reported in Table 26 below.

**Table 26**

| | No Activation | 2 seconds (MPa) |
|---|---|---|
| Bond 1 | 0.00 | 5.32 |
| Bond 2 | 0.00 | 5.83 |
| Bond 3 | 0.00 | 4.22 |
| Bond 4 | 0.00 | 5.26 |
| Bond 5 | 0.00 | 6.11 |

Using two seconds exposure at 1.4 W/cm² from a 405 nm LED it took two minutes to reach a fixture strength of 0.1MPa at RT.

## Claims

1. A light induced redox curing composition comprising
a) an (meth)acrylate monomer;
b) an (meth)acrylate resin;
c) a cationic photoinitiator; and
d) a hydroperoxide.

2. The light induced redox curing composition according to claim 1, wherein the (meth)acrylate monomer is aromatic or aliphatic mono-, di-, or poly-functional (meth)acrylate monomer, preferably represented by the formula H₂C=CGCO₂A, wherein G is selected from the group consisting of hydrogen, halogen or alkyl groups having from 1 to 4 carbon atoms, and A selected from the group consisting of metals, alkyl, cycloalkyl, alkenyl, cycloalkenyl, alkaryl, aralkyl or aryl groups having from 1 to 16 carbon atoms, any of which may be optionally substituted, more preferably the (meth)acrylate monomer is selected from the group consisting of polyethylene glycol di(meth)acrylate, tetrahydrofuran (meth)acrylate, hydroxypropyl (meth)acrylate, hexanediol di(meth)acrylate, trimethylol propane tri(meth)acrylate, diethylene glycol dimethacrylate, triethylene glycol dimethacrylate, benzylmethacrylate, tetraethylene glycol dimethacrylate, dipropylene glycol dimethacrylate, di-(pentamethylene glycol) dimethacrylate, tetraethylene diglycol diacrylate, diglycerol tetramethacrylate, tetramethylene dimethacrylate, ethylene dimethacrylate, neopentyl glycol diacrylate, trimethylol propane triacrylate, tetrahydrofurfuryl (meth)acrylate, alkoxylated tetrahydrofurfuryl (meth)acrylate, cyclic trimethylolpropane formal acrylate, 2-phenoxyethyl (meth)acrylate, 2-(2-ethoxyethoxy) ethyl(meth)acrylate, alkoxylated lauryl (meth)acrylate, stearyl (meth)acrylate, lauryl (meth)acrylate, isodecyl (meth)acrylate, isooctyl (meth)acrylate, octyldecyl (meth)acrylate, tridecyl (meth)acrylate, caprolactone (meth)acrylate, methoxy polyethylene glycol (350) monoacrylate, methoxy polyethylene glycol (550) monoacrylate, 2-hydroxyethyl (meth)acrylate, isobornyl (meth)acrylate, hydroxypropyl (meth)acrylate, (meth)acrylic acid, copper di(meth)acrylate, iron di(meth)acrylate, zinc di(meth)acrylate and mixtures thereof, preferably the acrylate monomer is selected from the group consisting of 2-hydroxyethyl methacrylate, isobornyl methacrylate, hydroxypropyl methacrylate, acrylic acid and mixtures thereof.

3. The light induced redox curing composition according to claim 1 or 2, wherein the (meth)acrylate monomer is present in a quantity from 50 to 70% by weight of the total weight of the of the composition, preferably from 53 to 67% and more preferably from 55 to 65%.

4. The light induced redox curing composition according to any one of claims 1 to 3, wherein the (meth)acrylate resin is selected from the group consisting of a (meth)acrylate resin, a polyurethane (meth)acrylate resin, an epoxy (meth)acrylate resin, and mixtures thereof, preferably the (meth)acrylate resin is a polyurethane methacrylate resin.

5. The light induced redox curing composition according to any one of claims 1 to 4, wherein the (meth)acrylate resin is present in a quantity from 10 to 35% by weight of the total weight of the of the composition, preferably from 15 to 30% and more preferably from 18 to 26%.

6. The light induced redox curing composition according to any one of claims 1 to 5, wherein the cationic photoinitiator is a salt represented by the formula A⁺B⁻ which produces cationic active species by irritation of light, and wherein
the cation A⁺ is selected from the group consisting of aromatic iodonium ions, aromatic sulfonium ions and aromatic iron ions, and wherein
the anion B is selected from the group consisting of SbF⁻₆, PF⁻₆, AsF⁻₆ and B(Aryl)⁻₄, B(C₆F₅)₄⁻, B(C₆F₄OCF₃)₄⁻ and B(C₆F₄CF₃)₄⁻.

7. The light induced redox curing composition according to any one of claims 1 to 6, wherein the cationic photoinitiator is present from 0.5 to 15% by weight of the total weight of the composition, preferably from 5 to 13%, and more preferably from 7 to 11%.

8. The light induced redox curing composition according to any one of claims 1 to 7, wherein the hydroperoxide is represented by the formula:
R²OOH
wherein R² is a hydrocarbon group containing up to 18 carbon atoms, preferably R² is a C₁-C₁₂ alkyl, C₃-C₁₂ cycloalkyl, C₆-C₁₈ aryl or C₆-C₁₈ aralkyl group,
preferably the hydroperoxide is selected from the group consisting of cumene hydroperoxide (CHP), para-menthane hydroperoxide, t-butyl hydroperoxide (TBH), t-amyl hydroperoxide, 1,2,3,4-tetramethylbutyl hydroperoxide and mixtures thereof, and more preferably the hydroperoxide is para-menthane hydroperoxide.

9. The light induced redox curing composition according to any one of claims 1 to 8, wherein the hydroperoxide is present from 1 to 15% by weight of the total weight of the composition, preferably from 1.5 to 12%, and more preferably from 3 to 10%.

10. The light induced redox curing composition according to any one of claims 1 to 9 may further comprise an antioxidant, preferably selected from the group consisting of butylhydroxytoluene, octadecyl-3,5-bis(1,1-dimethyl)-4-hydroxybenzene-propanoate, tris(2,4-di-tert.-butylphenyl) phosphite, pentaerythritol tetrakis(3-(3,5-di-tert-butyl-4-hydroxyphenyl)propionate), pyrogallol triphenyl phosphite, tris(nonylphenyl)phosphite, dilauryl thiodipropionate, and mixtures thereof.

11. The light induced redox curing composition according to claim 10, wherein the antioxidant is present from 0.01 to 2% by weight of the total weight of the composition, preferably from 0.01 to 1%, and more preferably from 0.05 to 0.5%.

12. The light induced redox curing composition according to any one of claims 1 to 11 may further comprise a photoinitiator, preferably selected from the group consisting of isopropyl thioxanthone, 1-hydroxycyclohexyl phenyl ketone, ethyl phenyl benzoyl phosphinate, 2-hydroxy-2-methyl-1-phenyl-propan-1-one, bis(2,4,6-trimethylbenzoyl)-phenylphosphineoxide, 1-hydroxy-cyclohexyl-phenyl-ketone, 2,4,6-trimethylbenzoyl-diphenyl-phosphineoxide, 2-methyl-1-[4-(methylthio)phenyl]-2-morpholino propan-1-one, 2-benzyl-2-N,N-dimethylamino- 1-(4-morpholinophenyl)-1-butanone, combination of 1-hydroxy cyclohexyl phenyl ketone and benzophenone, 2,2-dimethoxy-2-phenyl acetophenone, 2-hydroxy-2-methyl-1-phenyl-1-propane, combination of 2,4,6-trimethylbenzoyldiphenyl-phosphine oxide and 2-hydroxy-2-methyl-1-phenyl-propan-1-one, 1-[4-(2-hydroxyethoxy)-phenyl]-2-hydroxy-2-methyl-1-propane-1-one, combination of 50 wt. % of diphenyl (2,4,6-trimethylbenzoyl) phosphine oxide and 50 wt. % of 2-hydroxy-2-methyl-1-phenyl-1-propanone, combination of bis(2,6-dimethoxybenzoyl-2,4,4-trimethylpentyl)phosphine oxide and 2-hydroxy-2-methyl-1-phenyl-propan-1-one, bis(η<5>-2,4-cyclopentadien-1-yl)-bis[2,6-difluoro-3-(1H-pyrrol-1-yl)phenyl]titanium, 2-benzyl-2-N,N-dimethylamino-1-(4-morpholinophenyl)-1-butanone, di-camphorquinone, and mixtures thereof.

13. The light induced redox curing composition according to claim 12, wherein the photoinitiator is present from 0.1 to 10% by weight of the total weight of the composition, preferably from 0.5 to 5%, and more preferably from 1 to 3%.

14. A cured adhesive product obtained by curing the light induced redox curing composition according to any of claims 1 to 13.

15. An article comprising the light induced redox curing composition according to any of claims 1 to 13 or the cured adhesive product according to claim 14.

16. Use of light induced redox curing composition according to any of the preceding claims 1 to 13 or cured adhesive product according to claim 14 in electrocoated steel bonding.
